# EUROPEAN PATENT APPLICATION

(11) **EP 4 783 729 A1**
(43) Date of publication of application: **29.07.2026**
(21) Application number: 26154774.9
(22) Date of filing: 28.01.2026
(51) Int. Cl.: H04W 76/23

(54) **SYSTEM, METHOD, AND APPARATUS FOR FRAME FILTERING IN PERSONAL AREA NETWORKS**

(30) Priority: 28.01.2025 RO 202500031
(71) Applicant: NXP USA, Inc., Austin, TX 78735 (US)
(72) Inventor: Gucea, Doru Cristian, 5656 AG Eindhoven (NL); Stefan, George, 5656 AG Eindhoven (NL)
(74) Representative: Schwarzweller, Thomas

(57) **Abstract**

A dual-personal area network (PAN) router receives one or more fields of a frame of a PAN on a channel; determines that the dual-PAN router is not to route the frame to a PAN based on the one or more received fields and before the entire frame is received; and switches to receive on another channel for a transmission duration of the frame by an end device in response to the determination.

## Description

### FIELD OF USE

The present disclosure relates generally to data communication, and more particularly, to a system, method, and apparatus for frame filtering in personal area networks.

### BACKGROUND

A router compliant with Institute of Electrical and Electronics Engineers (IEEE) 802.15.4 allows an end device to attach to and communicate with a personal area network (PAN) by sending and receiving frames directed to the PAN over one channel. Further, the same end device or different end devices could attach to and communicate on another PAN by sending and receiving frames directed to the other PAN over another channel. To service these end devices, the router alternates switching between the two channels to route frames associated with the different PANs via the two channels.

### BRIEF DESCRIPTION OF THE DRAWINGS

The following detailed description of the preferred embodiments of the present disclosure will be better understood when read in conjunction with the appended drawings. The present disclosure is illustrated by way of example, and not limited by the accompanying figures, in which like references indicate similar elements.
FIG. 1 is example block diagram of a communication system including a plurality of end devices and a plurality of routers which support communication with a plurality of personal area networks (PANs) in accordance with one or more embodiments.
FIG. 2 illustrates fields of an immediate (Imm) acknowledgment and enhanced acknowledgement frame which are received to acknowledge receipt of a frame in accordance with one or more embodiments.
FIG. 3 is a table stored in a memory of a router to keep track of a sequence number in a frame received from an end device in accordance with one or more embodiments.
FIG. 4 is a flow chart of functions associated with dual-PAN router switching between different channels in accordance with one or more embodiments.

### DETAILED DESCRIPTION

The detailed description of the appended drawings is intended as a description of the currently preferred embodiments of the present disclosure, and is not intended to represent the only form in which the present disclosure may be practiced. It is to be understood that the same or equivalent functions may be accomplished by different embodiments that are intended to be encompassed within the scope of the present disclosure.

Embodiments disclosed herein are directed to a frame filtering circuit of a dual-PAN router which determines whether the router routes a frame of a PAN transmitted by an end device and received on a channel and while the frame of the PAN which the router does not route is transmitted on the channel switching to another channel for a duration of the frame transmission by an end device. The switch is performed based on receiving one or more fields of the frame such a destination PAN ID field or destination address field. If there is a destination PAN ID mismatch between the destination PAN ID in the destination PAN ID field and a destination PAD ID of frames received on the channel which the dual-PAN router routes, the frame filtering circuit causes a channel switch circuit to switch to receiving frames on the other channel for a time required (T) for the entire frame transmission rather than waiting for the reception to be completed or switching after a dwell time. If there is a destination address mismatch between the destination address in the destination address field and a destination address of frames received on the channel which the dual-PAN router routes, the frame filtering circuit causes a dual-PAN router to switch to receiving frames on the other channel for a time required (T) for an entire frame transmission rather than waiting for the reception to be completed or switching after a dwell time. Advantageously, the dual-PAN router is able to route frames on the other channel during the time T which would otherwise be lost if the dual-PAN router did not switch to the other channel during the time T. The dual-PAN radio is also able to extend its stay on the other channel which provides a high chance of receiving a frame to route. Well known instructions, protocols, structures, and techniques have not been shown in detail in order not to obfuscate the description.

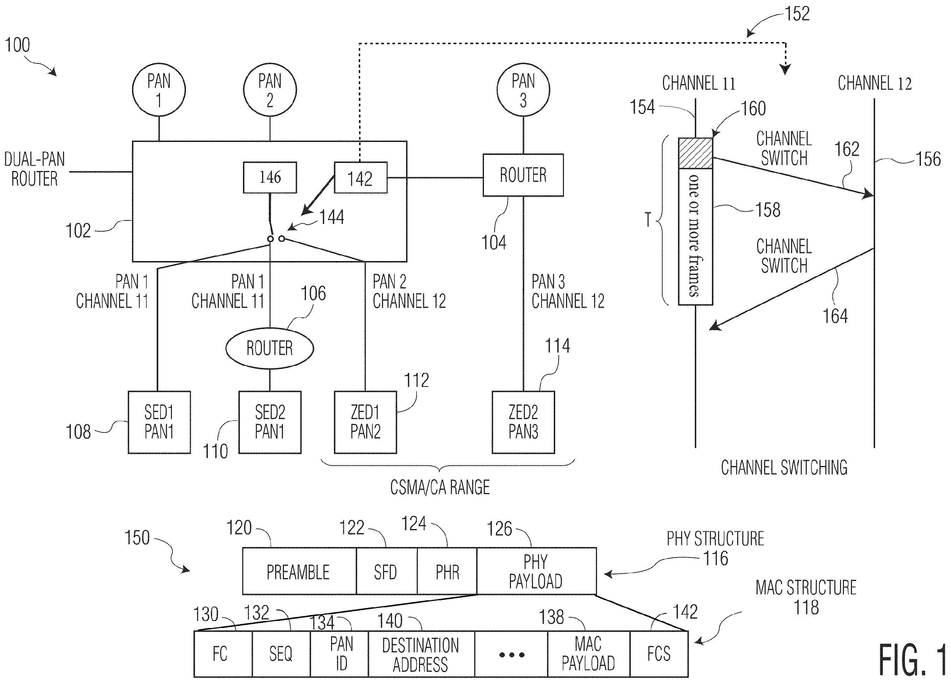

FIG. 1 is an example block diagram of a communication system 100 including a plurality of end devices 108-114 and a plurality of wireless routers 102, 104, 106 which support communication with a plurality of personal area networks (PANs) in accordance with one or more embodiments. The PANs may be operating based on Institute of Electrical and Electronics Engineers IEEE 802.15.4 low rate wireless PAN standard. The standard defines a physical layer (PHY) and medium access control (MAC) specification for wireless connectivity with fixed, portable and moving devices within or entering a personal operating space. The block diagram shows a topology with a dual-PAN router 102 supporting communication with a plurality of PAN, illustrated as PAN1 and PAN2 in an example, where the dual-PAN router 102 is arranged route frames of PAN1 on channel 11 and frames of PAN2 on channel 12 and router 104 is arranged to route frames of PAN3 on channel 12. Further, the dual-PAN router 102 has one radio 146 which switches by a channel switching circuit 144 between channels to transmit or receive frames of one channel at a time. The end devices 108-114 such as wireless sensors, cameras or microphones as examples operate in accordance with IEEE 802.15.4 as a sleepy end device (SED) and with a thread protocol which is an IPv6-based, low-power mesh networking technology for Internet of things (IoT) products or as a Zigbee end device (ZED) operating with low power, low data rate, and close proximity based on IEEE 802.15.4. The sleepy end device may be an end device which further achieves lower power consumption by sleeping for a set period of time to extend battery life. A sleepy end device 108 (SED1_PANT1) may be operating on channel 11 and transmit frames of PAN1 and a Zigbee end device (ZED1_PAN2) 112 may be operating on channel 12 and transmit frames of PAN2. Also, a router 106 may be in communication with the dual-PAN router 102 and a sleepy end device (SED2_PAN1) 110. The router 106 may receive frames of PAN1 from SED2_PAN1 110 and route the frames to the dual-PAN router 102 via channel 11. In the same channel 12, the router 104 may also receive from a ZED2_PAN3 114 frames of PAN3. End devices which generate frames for PAN2 and PAN3 may be in a carrier sense multiple access/collision avoidance (CSMA/CA) range and dual-PAN router 102 may be arranged to route frames of PAN1 and PAN2 and not PAN3 even though frames of PAN2 and PAN3 are received over a same channel 12 in the example. The routers, client devices, and channels illustrated and arranged in the communication system 100 are exemplary in nature and other embodiments may have fewer or more routers or end devices providing communication to more or less PANs over fewer or more channels. The routers, end devices, and associated components described herein may be implemented with circuitry such as one or more of analog circuitry, mix signal circuitry, memory circuitry, logic circuitry, or processing circuitry that executes code stored in a memory that when executed by the processing circuitry performs the disclosed functions.

In one or more embodiments, the dual-PAN router 102 having only one radio 146 may switch between two channels under hardware or software control to transmit and receive or route frames from the end devices to the two PANs. The dual-PAN router 102 may only route frames received from one channel at a time. To define a different "PAN" in the communication system 100, the dual-PAN router 102 maintains two sets of network parameters where "PAN1" and "PAN2" refer to the two PANs. Each parameter set uniquely identifies a PAN as shown by Table 1 below.

**TABLE 1**

| **PAN0** | **PAN1** |
|---|---|
| CHANNEL_NUM0 | CHANNEL_NUM1 |
| MACPANID0 (16-bit register) | MACPANID1 (16-bit register) |
| MACSHORTADDRS0 (16-bit register) | MACSHORTADDRS1 (16-bit register) |
| MACLONGADDRS0 (64-bit registers) | MACLONGADDRS1 (64-bit registers) |
| PANCORDNTR0 (1-bit register) | PANCORDNTR1 (1-bit register) |

In one or more embodiments, the network parameter of a PAN may include one or more of two media access addresses corresponding to a short address and a long address to identify the PAN of the frame, a channel number on which the PAN operates, and a control bit which indicates whether reception of the frames of the PAN is enabled or disabled by the dual-PAN router 102. The dual-PAN router 102 may have a timer to automatically switch a switch of channel switching circuit 144 between channels to receive frames of a PAN (including on-the-fly channel-changing). In one or more embodiments, an auto-dual-PAN mode controlled by IEEE 802.15.4 Link Layer hardware (HW) of the dual-PAN router 102 defines a continuous switch between the two channels to receive frames of the two PANs. The channel switching may be performed in hardware once the dual-PAN router 102 has configured PAN parameters. The switch may occur in various conditions. As examples, the channel switch may occur when a receive switch command is generated by the link layer HW, a dwell timeout which is an amount of time during which the hardware will be configured to receive on a given channel expires, or no frame is detected (e.g., no start frame delimiter of a frame is detected). Similarly, as examples, the channel switching stops when a frame of a particular PAN is received on a channel, an IDLE command is generated by the link layer HW to stop communication, the dwell time expires, a phase lock loop (PLL) between the client device and PAN becomes unlocked, or an indication is received that the PAN communication is not able to coexist with another type of communication, such as IEEE 802.11 WiFi.

Frame 150 is an example of a frame that is received on a channel. The frame 150 has a physical layer frame structure 116 including a media access control structure 118. The physical layer frame structure 116 has a plurality of fields including a preamble 120 (4 bytes) which is a bit pattern that indicates start of a received frame, a start of frame delimiter (SFD) (1 byte) 122, a physical layer header (PHR) 124, and a PHY payload 126. The PHY payload 126 may include the media access control (MAC) frame structure 118 which has a plurality of subfields including a frame control (FC) 130 (2 bytes) which is a set of bits that indicates the type of frame being transmitted, including details like whether it's a data frame, a control frame, or a management frame and whether acknowledgment is required, a sequence number 132 (1 byte), destination PAN ID 134 (2 byte), and destination address 140 among other fields followed by a MAC payload 138 and frame check sequence (FCS) 142. The PHR header 124 defines a frame length of the PHY payload 126 and is used to calculate a frame transmission time (e.g., 1 byte takes 32 us to transmit).

In one or more embodiments, a probability of receiving on a channel an IEEE 802.15.4 frame of a PAN routed by the dual-PAN router 102 which is continuously scanning for incoming frames on two different channels is increased with fast channel switching between channels so that frames are not lost. A frame of a PAN which is received on a channel and which the dual-PAN router 102 is to route is lost if the dual-PAN router 102 is not switched to the channel to be able to receive the frame. Additionally, the probability of routing such frames is increased by being able to lock on a frame of a PAN by detecting the preamble 120 of the frame. If two IEEE 802.15.4 frames are received in parallel on two channels and their preambles are overlapping in time, the preamble of one frame of a PAN may be received on one of the channels while the other frame on the other channel may be lost. In some embodiments, the dual-PAN router 102 may be able to switch channels to receive frames of different PANs with a short latency and have a small dwell time. For example, a dwell-time on a channel may be 16 microseconds and the dual-PAN router may have a fast preamble detection where the decision to remain on a channel may be at least the dwell time or a multiple of dwell time if one byte of the preamble is detected and a channel switching time of only 30 us. In one or more embodiments, a detection of the preamble may take as long as 32 us and 30 us to switch channels for a total of 62 us to transition from one channel to another channel if the preamble of a frame is not detected.

In one or more embodiments, the dual-PAN router 102 may determine whether the frame has a PAN ID in the PAN ID field 134 if the preamble is detected. The dual-PAN router 102 may be arranged to route a frame received on the channel with the particular PAN ID and not route frames which are received on a channel not with the particular PAN ID. A plurality of byes may be received, at which point a determination is made that the preamble of a frame is received. If the frame does not have the particular PAN ID, a filtering circuit 142 of the dual-PAN router 102 will filter and drop the frame rather than the dual-PAN router 102 routing the frame to the PAN with the PAN ID. If the frame has the particular PAN ID, the filtering circuit 142 of the dual-PAN router 102 will not filter and drop the frame and the dual-PAN 102 router may route the frame to the PAN with the PAN ID. In an embodiment, the dual-PAN router 102 may perform this filtering with equal dwell time spent on each channel so long as no frame that the dual-PAN router 102 routes is detected.

A problem with this approach is that the radio 146 of the dual-PAN router 102 is locked to a channel until a determination is made whether the frame is to be filtered and dropped which may require receiving the indication of the PAN ID in the frame 150. Another problem with this approach is that the radio 146 will switch to another channel and then back to the channel where the initial frame was received but no routing on the channel will be performed until the frame not having the PAN ID which the dual-PAN router 102 routes is completely received on the channel. There is little chance of receiving any other frames on the channel until the frame is completely received because the CSMA/CA mechanism from IEEE 802.15.4 should block the transmission of any frame, thus making the switch to the channel during transmission of the frame with the PAN ID by an end device useless and increasing risk of missing a frame on the other channel.

To illustrate, the dual-PAN router 102 may be arranged to receive frames of PAN1 on channel 11 and PAN2 on channel 12. The dual-PAN router 102 may continuously scan for any frame having the destination PAN ID of the PAN1 or PAN2. As an example scenario, on channel 12, ZED_PAN3 114 may start exchanging packets with the router 104. Dual-PAN router 102 which was previously continuously scanning for any frame preamble on the channel 12 will detect a preamble from ZED_PAN3 114 and it will lock on to the frame until the destination PAN ID 134 of the frame is received. This means that the radio will lock on channel 12 for receiving the preamble 120 (4 bytes), SFD 122 (1 byte), PHR 124 (1byte), Frame Control 130 (2 bytes), Sequence Number 132 (1 byte) and Destination PAN ID 134 (2 byte), 11 bytes in total. This locks the radio on channel 12 for at least 352 us missing any possible frames to be routed on another channel. Those received frames associated with PAN3 could also include acknowledgement frames. These frames may also be filtered by the frame filtering circuit 142 and not routed as well also increasing the radio lock on the channel and missing any possible frames to be routed on another channel. Further, the dual-PAN router 102 may switch to channel 11 and then back to channel 12 based on a predetermined fixed time (e.g., dwell time) to continuously search for frames of PAN2 on channel 12 even if on channel 12 ZED1_PAN2 112 will not succeed transmitting a frame until the frame of PAN3 (and possibly its ACK) on channel 12 is completely received/transmitted because of the CSMA/CA operation of the channel 12. The switching to receiving frames on channel 12 based on the dwell time results in the dual-PAN router 102 missing receptions of frames on channel 11. A chance of missing a frame of a particular PAN on one channel increases directly proportional with the volume of traffic on another channel. Also, power consumption increases by the dual-PAN router 102 directly proportional with the number of channel switches.

In one or more embodiments, the SED2_PAN1 110 may exchange packets with its router 106 which is a local over the air (OTA) provider on channel 11. The frame may have a destination address 140 of the router 106 and will be filtered by frame filtering circuit 142 of the dual-PAN router 102 which also receives the frame OTA because the frame is not destined to the dual-PAN router 102. This locks the radio 146 on channel 11 until the destination address 140 is received missing any possible frames to be routed on channel 12. The dual-PAN router 102 may also switch to channel 12 and then back to channel 11 based on the dwell time also resulting in the dual-PAN router 102 missing receptions of frames on channel 12.

Embodiments disclosed herein are directed to causing the dual-PAN router 102 to switch from one channel to another channel while a frame which has a PAN ID which the dual-PAN router 102 is not arranged to route is being transmitted by an end device. The switch may be for a time T for one or more frames to be transmitted on the channel.

Timing diagram 152 illustrates further operation of filtering circuit 142 of the dual-PAN router 102 to perform this switching in accordance with the one or more embodiments. A frame 158 may begin to be received on channel 11 154. A preamble 160 of the frame 158 may be received and a determination is made by the frame filtering circuit 142 that frame 158 is not to be routed by the dual-PAN router 102 resulting in a channel switch and filtering and dropping of the frame 158 since it is not routed. If there is a PAN ID mismatch with the PAN ID 132 of the frame being received on the one channel and PAN ID of frames received on the channel to be routed by the dual-PAN router 102, the frame filtering circuit 142 may cause the channel switching circuit 144 to switch the receiver 146 at 162 from channel 11 154 to channel 12 156 to receive frames for a time required (T) for the entire frame transmission of the frame 158 by the end device over the channel 11 154 rather than switching back to the channel 11 154 after a dwell time or other fixed predetermined time which is independent of transmission time of the frame. The entire frame transmission may include all fields of the frame 158. If there is a destination address mismatch with the destination address 134 of the frame being received on one channel and destination address of frames routed by the dual-PAN router 102 on the channel the frame filtering circuit 142 may cause the channel switching circuit 144 to switch the receiver from channel 11 154 at 162 to channel 12 156 to receive frames for a time required (T) for the entire transmission of the frame 158 over the channel 11 154 rather than switching back to the channel 11 154 after a dwell time or other fixed predetermined time which is independent of transmission time of the frame. Then after the time T the dual-PAN router 102 may switch back at 164 to channel 11 154. The dual-PAN router 102 abandons reception on one channel early and switches to receiving frames on another channel in order to maximize the chances of receiving a frame on the other channel.

In some embodiments, the frame 158 may be one or more frames. The frame 158 may include an initially received frame and include an associated acknowledgment frame which acknowledges receipt of the initially transmitted frame. The acknowledgement frame may be transmitted by an end device on a PAN which is supposed to receive the initial frame. The time T may include the time to transmit these acknowledgment frames and this time may also be taken into account in determining how long for the dual-PAN router 102 to wait until before switching back to channel 11 from channel 12. The dual-PAN router 102 may switch to and receive on the other channel 12 156 until the initial frame and acknowledgment on the channel 11 154 is transmitted by the end devices to improve chances that dual-PAN router 106 is able to receive a frame on the other channel.

Advantageously, the dual-PAN router 102 may dynamically switch reception from one channel to the other channel for a time associated with transmission of a frame of a PAN by an end device and which the dual-PAN router 102 is not arranged to route on the one channel. For example, the dual-PAN router 102 may switch to receive over the other channel once a frame of a PAN on one channel is detected which the dual-PAN router 102 is not to route and until the frame is transmitted on the one channel. This is in contrast with the current implementations where the radio stays a fixed amount of time on each channel to receive a frame, without taking into consideration whether this frame will be routed and a time for frame transmission by the end device. The dual-PAN radio 102 is able to extend its stay on a channel which provides a high chance of receiving a frame of a PAN to route.

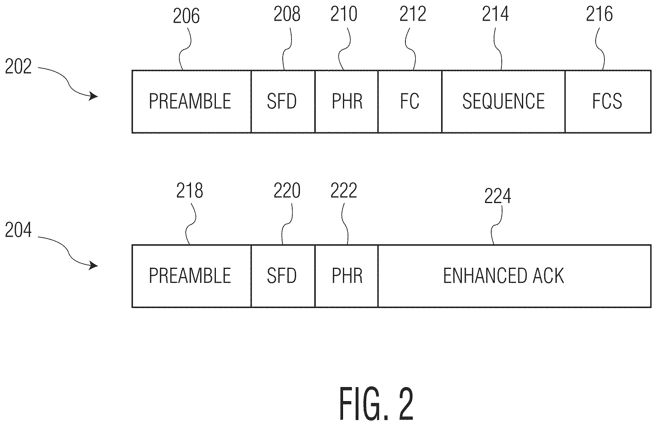

FIG. 2 illustrates fields of an immediate (Imm) acknowledgment 202 and enhanced acknowledgement 204 which are received by a router and acknowledge receipt of a frame in accordance with one or more embodiments. An end device which receives the frame which the dual-PAN router 102 is not arranged to route may transmit an acknowledgment frame which the dual-PAN router 102 also does not route. The FC 130 may indicate whether an acknowledgment is to follow the frame. The acknowledgment 202, 204 may be received in the PHY payload 126 of the frame as a MAC structure 118. The fields of the Imm acknowledgment 202 include a preamble 206, an SFD 208, a PHR 210, a frame control (FC) 212, a sequence number 214, and a frame check sequence (FCS) 216. A time to receive frame 150 and its acknowledgment 202 to the frame 150 may be used to determine a duration T that one or more frames of a PAN will be transmitted on a channel and how long to wait before switching back to the channel on which the frame and acknowledgement is transmitted. The frame length (octets) indicated by the PHR field 124 may be used to determine a frame transmission time on the channel. If an ACK 202 is transmitted for the frame 150, then a time of the ACK 202 (T_ACK) frame and T_ACK + 192us (ACK turnaround time) is added to the time to transmit the frame 150 to define T before performing the channel switch. If AR==1 and Frame Version == 0/1 is indicated in the frame control field 130 of the frame 150 to be acknowledged, then the ACK with the format of the Imm ACK 202 will follow in a payload of the frame. In this case T_ACK= (preamble (4 bytes) + SFD (1 byte) + PHR (1byte) + Frame Control (2 bytes) + Sequence Number (1 byte) + FCS (2 byte)) * 32 = 352us. If AR==1 and Frame Version == 2 is indicated in the frame control field 130 of the frame 150 to be acknowledged, then an enhanced-ACK 204 will follow the frame 150 which also includes a preamble 218, SFD 220, PHR 222, and enhanced acknowledgment field 224 which has the format of the MAC structure 118. The Imm may be at least 5 bytes and enhanced acknowledgement at least 15 bytes. Using these rules, a minimum time to transmit the Imm-ACK 202 or enh-ACK packet 204 can be computed and the dual-PAN router 102 may switch to receiving frames of another channel during this time so as to not miss any frames of the other PAN which the dual-PAN router 102 is to route on the other channel.

In some embodiments, the dual-PAN router 102 may use a sequence number in the sequence number field 132 of the frame 150 to determine whether a frame received on a channel are to be routed by the dual-PAN router 102. A sequence number is a value which is incremented as successive frames of a PAN are received from an end device on a channel. The sequence number is defined by IEEE 802.15.4-2015, section 6.7.1 which states: Each device shall store its current data sequence number (DSN) value in the MAC physical information block (PIB) attribute mac destination (macDsn) and initialize it to a random value; the algorithm for choosing a random number is outside the scope of this standard. Each time a Data frame or a MAC command is generated, the MAC sublayer shall copy the value of macDsn into the Sequence Number field of the MAC header (MHR) of the outgoing frame and then increment it by one. Each device shall generate exactly one data sequence number (DSN) regardless of the number of unique devices with which it wishes to communicate. The value of macDsn shall be permitted to roll over.

In one or more embodiments, a sequence number of a frame being received may be compared to a sequence number of a frame of a PAN already received to detect early frames on the channel which are not routed by the dual-PAN router 102 rather than waiting to receive the PAN ID or destination PAN address received later in the frame 150. If a sequence number 132 of a frame being received is in a range of sequence numbers based on the sequence number of the frame of the PAN already received and routed by the dual-PAN router 104, then it is highly likely that the frame that is being received is associated with a same PAN and should be routed. Alternatively, if a sequence number 132 of a frame being received is not in a range of sequence numbers based on the sequence number of the frame of the PAN already received, then it is highly likely that the frame is not associated with a same PAN and should be filtered, dropped, and not routed. The early detection may allow for sooner switch to another channel so as not to miss frames on the other channel and not having the radio 146 being locked on the channel longer to receive the PAN ID or destination PAN address received later in the frame 150 and determine whether the dual-PAN router 102 is to route the frame.

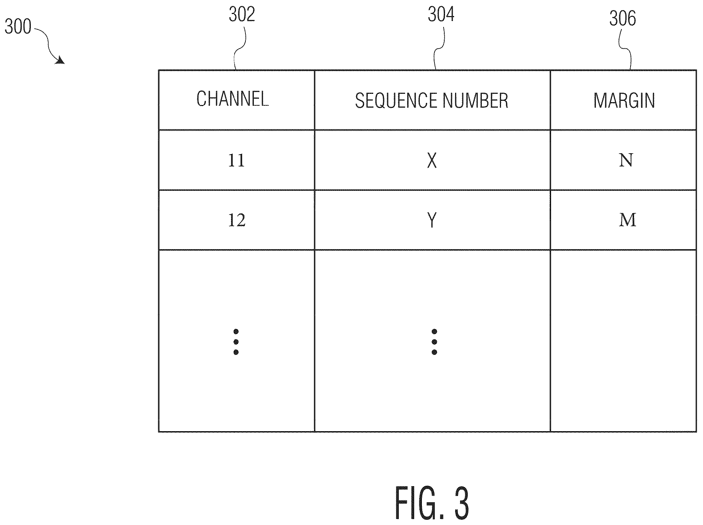

FIG. 3 is a table 300 stored in a memory of the dual-PAN router 102 to keep track of the sequence number received in a frame in accordance with one or more embodiments. The table 300 may identify a channel in a first column 302 and a sequence number of a frame of a PAN which the dual-PAN router 102 received in a second column 304. Column 306 may indicate the MARGIN which is number N or M of sequence number increments chosen such that it accounts for sequence number increments caused by retransmissions of frames (e.g., caused by interferences or by the fact that the dual-PAN router 102 was handling traffic on the other channel). The sequence number, N, and M may be integer numbers. For example, considering x the sequence number of the latest received frame on a channel 11 of a PAN routed by the dual-PAN router 102 and y the sequence number of the latest received frame on channel 12 of a PAN routed by the dual-PAN router 102 then a respective frame that is being received which has a sequence number is within the intervals [x+1, x+1+MARGIN N] on channel 11 or [y+1, y+1+MARGIN Y ] on channel 12 is to be routed by the dual-PAN router 102. Alternatively, considering x the sequence number of the latest received frame on a channel 11 and y the sequence number of the latest received frame on channel 12 then a respective frame that is being received which has a sequence number which does not belong to any of the intervals [x+1, x+1+MARGIN N] on channel 11 or [y+1, y+1+MARGIN Y] on channel 12 is be filtered by the filtering circuit 112 and not routed since it belongs to another PAN. The filtering results from the filtering circuit 142 causing the dual-PAN router 102 to switch channels based on this determination. The table 300 may store an indication of the MARGIN for each channel which is used in conjunction with the sequence number indicated by the table 300 to determine whether a sequence number in a frame being received on a channel is in an acceptable range indicative of being associated with a same PAN as the previously received frame. The MARGIN may be determined and updated dynamically by the dual-PAN router 102 by sniffing frame traffic and building run-time statistics of sequence numbers of frames of a PAN received on the channel over time. The frame filtering circuit 142 may determine that the sequence number of the next frame received is outside the acceptable range and filter the frame to cause the dual-PAN router 102 to not route the frame by switching channels when the sequence number of the next frame received is outside the acceptable range.

In some embodiments, the dual-PAN router 102 may not switch reception channels even when the sequence number of the frame being received is outside the acceptable range. For example, when an end device sends a frame to join or attach to the dual-PAN router 104, the dual-PAN router 102 does not know what the sequence number of the frame should be. However, an attaching frame to dual-PAN router 102 is always a Parent Request which has a fixed structure/size. The PHR 124 of the frame 150 includes a length field. In one or more embodiments, each time the PHR 124 contains a length of the frame that corresponding to a length of a possible Parent Request, filtering by the frame filtering circuit 142 based on the sequence number is not be applied. In another example, an end device may want to join the network. The dual-PAN router 102 does not know what the sequence number of the frame should be. However, joining is done through a Link Request Message which has a fixed structure/size. In one or more embodiments, each time the PHR 124 of the frame 150 contains a length of the frame that indicates a possible Link Request, filtering by the frame filtering circuit 142 based on the sequence number is not applied. In yet another example, a router communicates not only with the dual-PAN router 102, but also with other routers. In this case, two different packets from the router may have distant sequence number. Even in this situation, the dual-PAN router 102 may keep track of an expected sequence number for frames received from each of its neighbor routers and perform frame filtering based on a corresponding expected sequence number for that router and the MARGIN. The MARGIN should be greater than the one for simple topologies. In another example, a frame that is received may have a sequence number which is filtered or dropped because the sequence number does not fall within a range defined by the table 300. If another frame is also received with the same sequence number, then the frame should not be filtered or dropped even though the sequence number does not fall within the range defined by the table 300. The frame is not filtered because it may have been retransmitted. The dual-PAN router 102 improperly dropped the first frame. The filtering may be performed because the MARGIN was too restrictive. To illustrate, on channel 11 a sequence number of 10 with a MARGIN of 5 might be expected to be received but if there was a burst of traffic which generated the sending of 10 frames and the dual-PAN router 102 has not updated MARGIN (e.g., traffic sniffing was done at a slower pace). The frame would be dropped when the dual-PAN router 102 receives a frame with sequence number 20 even though it should not. Hence, the frame filtering is disabled when a frame with the same sequence number is received.

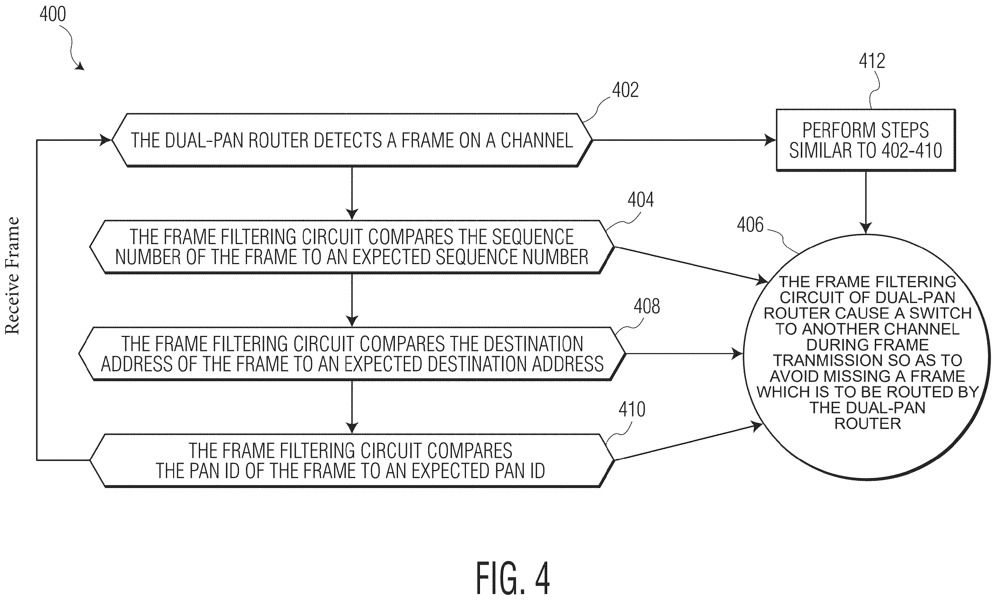

FIG. 4 is a flow chart 400 of functions associated with a dual-PAN router switching between channels in accordance with one or more embodiments. The switch allows for increasing chances that the dual-PAN router receives a frame of a PAN that the router routes.

At 402, the dual-PAN router detects a frame on a channel. The frame is transmitted by an end device. The frame may be detected based on receiving a preamble of the frame. The frame may also have a sequence number that is received and the dual-PAN router may be configured with an indication of a sequence number of the frame and sequence number margin. At 404, the frame filtering circuit compares the sequence number of the frame to an expected sequence number. The dual-PAN router may compare the sequence number of the frame with a sequence number received in a previous frame of the PAN received on the channel. If there is a mismatch between an expected sequence number and sequence number which is received in the frame at 406, then the frame filtering circuit of dual-PAN router causes a switch to another channel during the frame transmission by the end device so as to avoid missing a frame which is to be routed by the dual-PAN router. Based on the detection of the mismatch, the dual-PAN router is able to spend more time to receive frames on the other channel. If there is no mismatch at 406, then at 408, the frame filtering circuit compares the destination address of the frame to an expected destination address. If there is a mismatch between an expected destination address and destination address of the frame, then the dual-PAN router will switch to another channel at 406 so as to avoid missing a frame which is to be routed by the dual-PAN router. If there is no mismatch at 406, then at 410, the frame filtering circuit compares the PAN ID of the frame to an expected PAN ID. If there is a mismatch between an expected PAN ID and PAN ID which is received, then the dual-PAN router will switch to another channel at 406 so as to avoid missing a frame which is to be routed by the dual-PAN router. Otherwise, the frame is received and processing returns to 402. Steps similar to 402-410 may be performed at 412 to determine whether a frame of a PAN is received on the other channel or when a frame is not received on a channel after the dwell time. Based on the detection of the mismatch of sequence number, PAN ID, and/or destination address, the dual-PAN router is able to transition to receiving frames on another channel and spend more time to route frames on the other channel while a frame is received on a channel which the dual-PAN router does not route.

The dual-PAN router as described herein is described as a router which routes frames to two PAN over two channels. However, the dual PAN router is not limited to routing to two PAN over two channel and may route to two or more PAN over two or more channels in accordance with principles of the disclosed invention.

In one or more embodiments, a method for frame filtering by a dual-personal area network (PAN) router is disclosed. The method includes: receiving one or more fields of a frame on a channel; determining that the dual-PAN router is not to route the frame to a PAN based on the one or more received fields and before the entire frame is received; and switching the dual-PAN router to receive on another channel for a transmission duration of the frame by an end device in response to the determination. In one or more embodiments, the dual-PAN router includes routing frames received on two channels to one of two PANs, wherein the channel is a first channel and the PAN is a first PAN; and wherein frames of the first PAN are received on the first channel and frames of a second PAN are received on a second channel. In one or more embodiments, switching to receive on the other channel includes receiving on the other channel while the frame on the channel is being transmitted by an end device. In one or more embodiments, determining that the dual-PAN router is not to route the frame includes determining that a destination PAN identifier of the frame does not match a PAN ID of frames routed by the dual-PAN router for the channel. In an example, determining that the dual-PAN router is not to route the frame includes determining a sequence number of the frame does not match a sequence number in a range of sequence numbers. In one or more embodiments, the range is sequence numbers starting from a sequence number of a last previously received frame to a highest sequence number of the received frame accounting for frame retransmissions. In one or more embodiments, determining the sequence number of the frame does not match the sequence number in the range of sequence numbers is not performed when a parent request frame or link request frame is received before the frame. In one or more embodiments, determining the sequence number of the frame does not match the sequence number in the range of sequence numbers is not performed when a length field in a physical header of the frame is indicative of the frame being a parent request frame or link request frame. In one or more embodiments, determining that the dual-PAN router is not to route the frame includes determining that a destination address of the frame does not match an address of the dual-PAN router. In one or more embodiments, the method further includes switching back to the channel after a time of the frame transmission on the channel. In one or more embodiments, the method further includes switching back to the channel after a time of the frame transmission on the channel, a time to receive an acknowledgement frame, and an acknowledgement frame turnaround time. In one or more embodiments, the frame has a frame version field which indicates whether an acknowledgment frame is to be received following the frame.

In one or more embodiments, a dual-personal area network (PAN) router is disclosed. The router includes a receiver arranged to receive one or more fields of a frame of a PAN on a channel; a frame filtering circuit arranged to determine that the dual-PAN router is not to route the frame to a PAN based on the one or more received fields and before the entire frame is received; and a switching circuit arranged to switch to the dual-PAN router to receive on another channel for a transmission duration of the frame by an end device in response to the determination. In one or more embodiments, the dual-PAN router is arranged to receive over two channels, wherein the channel is a first channel and the PAN is a first PAN; and wherein frames of the first PAN are received on the first channel and frames of a second PAN are received on a second channel. In an example, the dual frame router is arranged to receive on the other channel while the frame on the channel is transmitted by an end device. In one or more embodiments, the frame filtering circuit arranged to determine the dual-PAN router is not to route the frame includes the frame filtering circuit arranged to determine that a destination PAN identifier of the frame does not match a PAN ID of frames routed by the dual-PAN router for the channel. In one or more embodiments, the frame filtering circuit arranged to determine the dual-PAN router is not to route the frame includes the frame filtering circuit arranged to determine a sequence number of the frame does not match a sequence number in a range of sequence numbers. In one or more embodiments, the range is sequence numbers starting from a sequence number of a last previously received frame to a highest sequence number of the received frame accounting for retransmissions of the frame. In one or more embodiments, the switching circuit is further arranged to switch back to the channel after a time of the frame transmission on the channel, a time to receive an acknowledgement frame, and an acknowledgement frame turnaround time. In one or more embodiments, the frame filtering circuit arranged to determine the dual-PAN router is not to route the frame includes the frame filtering circuit arranged to determine that a destination address of the frame does not match an address of the dual-PAN router.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more content processing apparatus such as a processor to perform the operations described (such as a program encoded in a non-transitory computer-readable communication medium, which can be a memory device, a storage device, a machine-readable storage substrate, or other physical, machine readable communication medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed. Other implementations fall within the scope of the following claims.

## Claims

1. A method for frame filtering by a dual-personal area network (PAN) router, the method comprising:
receiving one or more fields of a frame on a channel;
determining that the dual-PAN router is not to route the frame to a PAN based on the one or more received fields and before the entire frame is received; and
switching the dual-PAN router to receive on another channel for a transmission duration of the frame by an end device in response to the determination.

2. The method of claim 1, wherein the dual-PAN router comprises routing frames received on two channels to one of two PANs, wherein the channel is a first channel and the PAN is a first PAN; and wherein frames of the first PAN are received on the first channel and frames of a second PAN are received on a second channel.

3. The method of claim 1, wherein switching to receive on the other channel comprises receiving on the other channel while the frame on the channel is being transmitted by an end device.

4. The method of claim 1 or 2, wherein determining that the dual-PAN router is not to route the frame comprises determining that a destination PAN identifier of the frame does not match a PAN ID of frames routed by the dual-PAN router for the channel.

5. The method of any preceding claim, wherein determining that the dual-PAN router is not to route the frame comprises determining a sequence number of the frame does not match a sequence number in a range of sequence numbers.

6. The method of claim 5, wherein the range is sequence numbers starting from a sequence number of a last previously received frame to a highest sequence number of the received frame accounting for frame retransmissions.

7. The method of claim 5 or 6, wherein determining the sequence number of the frame does not match the sequence number in the range of sequence numbers is not performed when a parent request frame or link request frame is received before the frame.

8. A dual-personal area network (PAN) router comprising:
a receiver arranged to receive one or more fields of a frame of a PAN on a channel;
a frame filtering circuit arranged to determine that the dual-PAN router is not to route the frame to a PAN based on the one or more received fields and before the entire frame is received; and
a switching circuit arranged to switch to the dual-PAN router to receive on another channel for a transmission duration of the frame by an end device in response to the determination.

9. The dual-PAN router of claim 8, wherein the dual-PAN router is arranged to receive over two channels, wherein the channel is a first channel and the PAN is a first PAN; and wherein frames of the first PAN are received on the first channel and frames of a second PAN are received on a second channel.

10. The dual-PAN router of claim 8 or 9, wherein the dual frame router is arranged to receive on the other channel while the frame on the channel is being transmitted by an end device.

11. The dual-PAN router of any of claims 8 to 10, wherein the frame filtering circuit arranged to determine the dual-PAN router is not to route the frame comprises the frame filtering circuit arranged to determine that a destination PAN identifier of the frame does not match a PAN ID of frames routed by the dual-PAN router for the channel.

12. The dual-PAN router of any of claims 8 to 11, wherein the frame filtering circuit arranged to determine the dual-PAN router is not to route the frame comprises the frame filtering circuit arranged to determine a sequence number of the frame does not match a sequence number in a range of sequence numbers.

13. The dual-PAN router of any of claim 12, wherein the range is sequence numbers starting from a sequence number of a last previously received frame to a highest sequence number of the received frame accounting for retransmissions of the frame.

14. The dual-PAN router of any of claims 8 to 13, wherein the switching circuit is further arranged to switch back to the channel after a time of the frame transmission on the channel, a time to receive an acknowledgement frame, and an acknowledgement frame turnaround time.

15. The dual-PAN router of any of claims 8 to 14, wherein the frame filtering circuit arranged to determine the dual-PAN router is not to route the frame comprises the frame filtering circuit arranged to determine that a destination address of the frame does not match an address of the dual-PAN router.
